# EUROPEAN PATENT APPLICATION

(11) **EP 4 282 812 A1**
(43) Date of publication of application: **29.11.2023**
(21) Application number: 21921295.8
(22) Date of filing: 16.12.2021
(51) Int. Cl.: B82B 1/00, B82Y 30/00, B82Y 40/00, F16L 59/02

(54) **STRUCTURE, METHOD FOR MANUFACTURING STRUCTURE, AND HEAT-INSULATING MATERIAL**

(30) Priority: 22.01.2021 JP 2021009119
(71) Applicant: Sony Group Corporation, Tokyo 108-0075 (JP)
(72) Inventor: SAKAMOTO, Shigeru, Tokyo 108-0075 (JP)
(74) Representative: D Young & Co LLP
(86) International application number: PCT/JP2021/046642
(87) International publication number: WO 2022/158193

(57) **Abstract**

A structure according to an embodiment of the present disclosure includes: a plurality of nanoparticles or a plurality of nanofibers surface-coated with an amphipathic molecule or an organic silane molecule; and a cross-linking part that couples the plurality of nanoparticles or the plurality of nanofibers to each other.

## Description

### Technical Field

The present disclosure relates to a structure using a nanoparticle or nanofiber, a method of manufacturing the structure, and a heat insulating material, for example.

### Background Art

For example, PTL 1 discloses a heat insulating sheet having a sheet-like structure, in which hollow particles are coupled to each other, and which has a sheet average pore diameter of 70 nm or less, a sheet porosity of 90% by volume to 99% by volume, and a light transmittance of 85% or more.

### Citation List

### Patent Literature

PTL 1: Japanese Unexamined Patent Application Publication No. 2012-102204

### Summary of the Invention

Incidentally, a heat insulating material is desired to have improved light transmittance in order to enhance design of a product using the heat insulating material.

It is desirable to provide a structure having high light transmittance, a method of manufacturing the structure, and a heat insulating material.

A structure according to an embodiment of the present disclosure includes: a plurality of nanoparticles or a plurality of nanofibers surface-coated with an amphipathic molecule or an organic silane molecule; and a cross-linking part that couples the plurality of nanoparticles or the plurality of nanofibers to each other.

A method of manufacturing a structure according to an embodiment of the present disclosure includes: surface-coating a plurality of nanoparticles or a plurality of nanofibers by adding an amphipathic molecule or an organic silane molecule to a dispersion liquid in which the plurality of nanoparticles or the plurality of nanofibers are dispersed; and coupling the plurality of nanoparticles or the plurality of nanofibers to each other via a cross-linking part including a cross-linking agent further by adding the cross-linking agent.

A heat insulating material according to an embodiment of the present disclosure includes the structure according to an embodiment of the present disclosure.

In the structure according to an embodiment of the present disclosure, the method of manufacturing the structure according to an embodiment of the present disclosure, and the heat insulating material according to an embodiment of the present disclosure, the plurality of nanoparticles or the plurality of nanofibers surface-coated with the amphipathic molecule or the organic silane molecule are coupled to each other via the cross-linking part, thus preventing aggregation of the plurality of nanoparticles or the plurality of nanofibers and allowing for formation of an air gap between the plurality of nanoparticles coupled to each other or between the plurality of nanofibers coupled to each other.

### Brief Description of the Drawings

[FIG. 1] FIG. 1 is a schematic view of an example of an outline configuration of a structure according to an embodiment of the present disclosure.
[FIG. 2A] FIG. 2A is a schematic view of an example of a structure of a nanoparticle illustrated in FIG. 1.
[FIG. 2B] FIG. 2B is a schematic view of another example of the structure of the nanoparticle illustrated in FIG. 1.
[FIG. 3] FIG. 3 is an image diagram of a structure of the present embodiment upon being photographed using a transmission electron microscope.
[FIG. 4A] FIG. 4A is a schematic view of an example of an aspect of coupling between nanoparticles in a case of using the nanoparticle illustrated in FIG. 2A.
[FIG. 4B] FIG. 4B is a schematic view of another example of the aspect of coupling between nanoparticles in a case of using the nanoparticle illustrated in FIG. 2B.
[FIG. 5A] FIG. 5A is an explanatory schematic view of conditions of a cross-linking part in which nanoparticles coupled to each other do not aggregate.
[FIG. 5B] FIG. 5B is an explanatory schematic view of conditions of a cross-linking part in which nanoparticles coupled to each other do not aggregate.
[FIG. 6] FIG. 6 is a diagram illustrating a spatial arrangement of a plurality of nanoparticles coupled by the cross-linking part.
[FIG. 7] FIG. 7 is a flowchart illustrating manufacturing steps of the structure illustrated in FIG. 1.
[FIG. 8] FIG. 8 is a schematic view of an example of an outline configuration of a structure according to a modification example of the present disclosure.
[FIG. 9] FIG. 9 is a schematic view of another example of the outline configuration of the structure according to the modification example of the present disclosure.
[FIG. 10] FIG. 10 is a characteristic diagram illustrating a relationship between a transmittance and a particle diameter of a nanoparticle.

### Modes for Carrying Out the Invention

In the following, description is given in detail of embodiments of the present technology with reference to the drawings. The following description is merely a specific example of the present disclosure, and the present disclosure should not be limited to the following aspects. Moreover, the present disclosure is not limited to arrangements, dimensions, dimensional ratios, and the like of each component illustrated in the drawings. It is to be noted that the description is given in the following order.
1. An embodiment (An example of a structure including a plurality of nanoparticles surface-modified and coupled to each other via a cross-linking part)
   1-1. Configuration of Structure
   1-2. Method of Manufacturing Structure
   1-3. Workings and Effects
2. Modification Example (Another Example of Structure)
3. Another Application Example

### < 1. Embodiment>

### (1-1. Configuration of Structure)

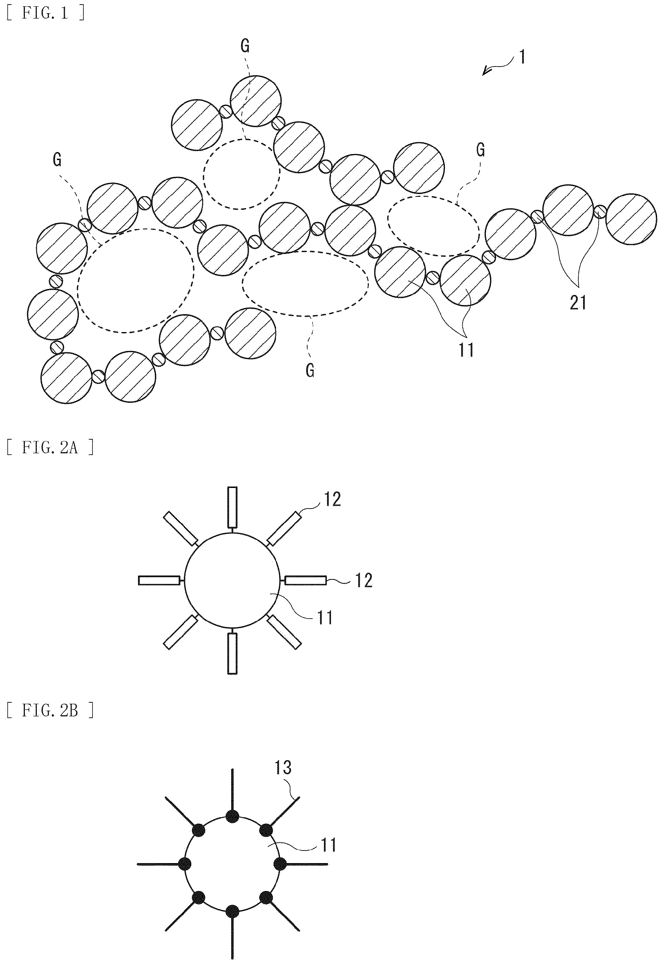

FIG. 1 schematically illustrates an example of a configuration of a structure (a structure 1) according to an embodiment of the present disclosure. The structure 1 is used, for example, as a heat insulating material that suppresses heat balance of a window by being attached to a glass window or being interposed between double windows. In the structure 1 of the present embodiment, a plurality of nanoparticles 11, that are surface-coated with an amphipathic molecule 12 (FIG. 2A) or an organic silane molecule 13 (FIG. 2B), are coupled to each other via a cross-linking part 21.

The nanoparticle 11 is, for example, a silica particle. An average particle diameter (median diameter) of the nanoparticle 11 is, for example, a diameter of 14 nm or less, and preferably 9 nm or less. The nanoparticle 11 is surface-coated with the amphipathic molecule 12, as illustrated in FIG. 2A, for example. Alternatively, the nanoparticle 11 is surface-deactivated by reacting with the organic silane molecule 13, as illustrated in FIG. 2B, for example. This brings the plurality of nanoparticles 11 into a state of not being able to be covalently bonded to each other.

The average particle diameter (median diameter) of the nanoparticle 11 is determined as follows. First, the structure 1 as a measurement target is subjected to working by a Focused Ion Beam (FIB) method or the like to perform thinning. In a case where the FIB method is used, a carbon film and a tungsten thin film are formed as protective films as a treatment prior to observing a transmission electron microscope (TEM) image of a cross-section described later. The carbon film is formed on a surface of the structure 1 by a vapor deposition method. The tungsten thin film is formed on the surface of the structure 1 by a vapor deposition method or a sputtering method. This allows for formation of the cross-section of the structure 1 by the thinning.

The cross-section of an obtained thinned sample is subjected to cross-sectional observation using a transmission electron microscope (Tecnai G2 manufactured by FEI Ltd.) to enable the plurality of nanoparticles 11 to be observed at an acceleration voltage of 200 kV and at a field of view of 50 nm × 50 nm, whereby a TEM photograph is taken. It is assumed that the photographing position is selected at random from the thinned sample.

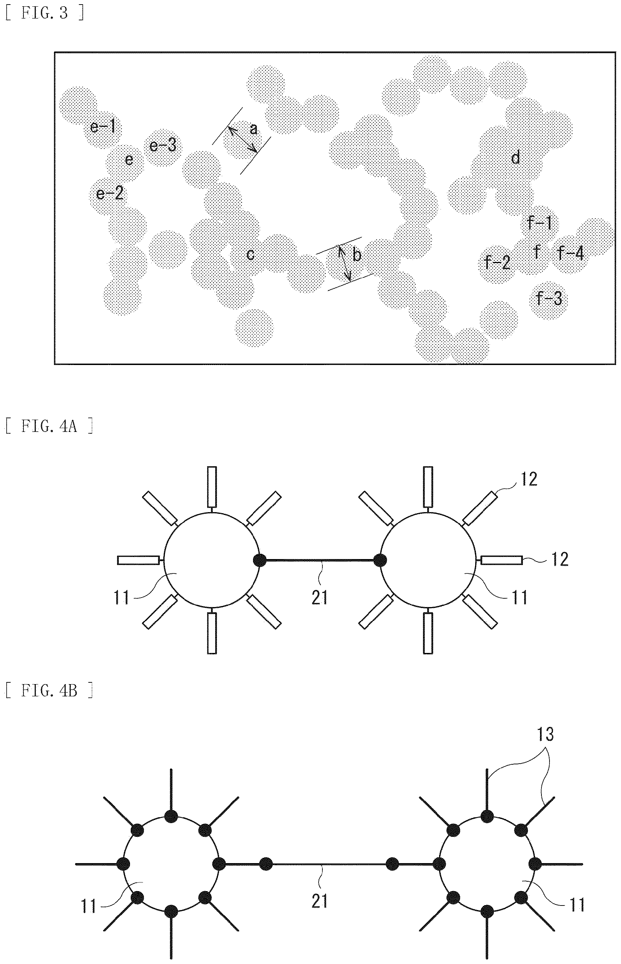

Next, 50 nanoparticles 11, of which diameters can be clearly confirmed in a direction of an observation surface, are selected from the taken TEM photograph. When the number of the nanoparticles 11, of which the diameters can be clearly confirmed, present inside photographed one field of view is less than 50, 50 nanoparticles 11, of which the diameters can be clearly confirmed in the direction of the observation surface, are selected from a plurality of fields of view. FIG. 3 is an image diagram of the TEM photograph of the structure 1 taken using a transmission electron microscope. For example, in FIG. 3, a nanoparticle a and a nanoparticle b, of which diameters can be clearly confirmed, are selected. Meanwhile, for example, as for a nanoparticle c and a nanoparticle d, the nanoparticles 11 overlap each other in a depth direction of observation and shapes thereof are not confirmable, and thus the nanoparticle c and the nanoparticle d are not suitable as measurement targets. The maximum diameter of each of the selected 50 nanoparticles 11 is measured.

Here, it is assumed that the maximum diameter is a maximum distance (so-called maximum Feret diameter) of distances between two parallel lines drawn from all angles to be tangent to the contour of the nanoparticle 11. In measuring the maximum diameter (maximum Feret diameter), the diameter of a particulate portion excluding a coated part (amphipathic molecule 12 or organic silane molecule 13) coating the surface of the nanoparticle 11 is measured. Determining a median of the 50 maximum diameters (maximum Feret diameters) thus determined allows for an average particle diameter (median diameter) of the nanoparticle 11.

As described above, the amphipathic molecule 12 is used to coat the surfaces of the nanoparticles 11 in order to prevent bonding between the plurality of nanoparticles 11. Specific examples of the amphipathic molecule 12 include a surfactant molecule, an amino acid molecule, or a macromolecule such as a block copolymer of a phospholipid or polyalkylene glycol.

As described above, the organic silane molecule 13 is used to deactivate the surfaces of the nanoparticles 11 in order to prevent bonding between the plurality of nanoparticles 11. The organic silane molecule 13 preferably forms a covalent bond with the nanoparticle 11 and includes a reactive functional group for forming a covalent bond with the cross-linking part 21. Examples of the reactive functional group include a vinyl group, a methacrylic group, an acrylic group, a glycidyl group, a mercapto group, an amino group, a hydrosilyl group, a hydroxyl group, a carboxyl group, a cyano group, an amino group, a cyano group, and the like. Examples of the organic silane compound including the above-mentioned reactive functional group include the one represented by the following general formula (1) or general formula (2).
(Chemical Formula 1) R¹ₓSi(OR²)₄₋ₓ ... (1)
(Chemical Formula 2) R¹ₓSiCl₄₋ₓ ... (2)

   (R¹ is any of a hydrogen atom, a vinyl group, an acryloxy group, a methacryloxy group, an aminopropyl group, a glycidoxypropyl group, and a mercaptopropyl group. R² is any of a methyl group, an ethyl group, a propyl group, and an isopropyl group. X is an integer of 3 or less.)

It is to be noted that presence or absence of the amphipathic molecule 12 and the organic silane molecule 13 coating the surface of the nanoparticle 11 and an aspect of the bonding between the nanoparticle 11 and the amphipathic molecule 12 or the organic silane molecule 13 are able to be confirmed, for example, by component analysis or composition analysis. Examples of the component analysis and the composition analysis include Fourier transform infrared spectroscopy analysis (FT-IR), gas chromatography analysis (GC), X-ray photoelectron spectroscopy (XPS), nuclear magnetic resonance analysis (NMR), and energy-dispersive X-ray analysis (EDX). The presence or absence of the amphipathic molecule 12 and the organic silane molecule 13 coating the surface of the nanoparticle 11 and the aspect of the boding between the nanoparticle 11 and the amphipathic molecule 12 or the organic silane molecule 13 are able to be analyzed using one or a plurality of the above-mentioned analysis methods.

The cross-linking part 21 couples the plurality of nanoparticles 11 to each other as described above. Specifically, the cross-linking part 21 is an organic matter or an inorganic matter covalently bonded directly to the nanoparticle 11, for example, as illustrated in FIG. 4A. Alternatively, the cross-linking part 21 is an organic matter or an inorganic matter covalently bonded indirectly to the nanoparticle 11 via an organosilyl group (organic silane molecule 13), for example, as illustrated in FIG. 4B. The cross-linking part 21 forms a covalent bond with one or two nanoparticles 11.

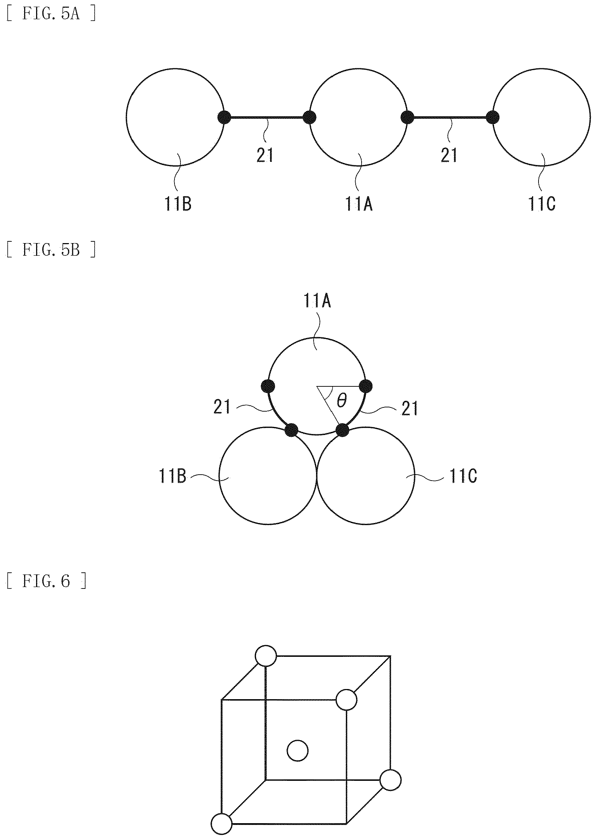

The length of the cross-linking part 21 is preferably smaller than half (1/2) of the average particle diameter (diameter) of the nanoparticle 11, for example. Specifically, as illustrated in FIG. 5A, the length of the cross-linking part 21 is preferably a length at which a nanoparticle 11B and a nanoparticle 11C are not in contact with each other, in a state where the two nanoparticles 11B and 11C are coupled to one nanoparticle 11A at respective farthest positions (diagonal positions) via the cross-linking parts 21. That is, the length of the cross-linking part 21 is preferably less than a circumference of 60° (= π/6 of diameter) of the nanoparticle 11 (11A), as illustrated in FIG. 5B. This makes it possible to prevent aggregation of the plurality of nanoparticles 11 inside the structure 1.

Examples of such a cross-linking part 21 include a cross-linking agent having two or more reactive points. Examples of a cross-linking agent that forms a covalent bond directly with the nanoparticle 11, among those mentioned above, include a silane compound represented by the following general formula (3), general formula (4), general formula (5), or general formula (6).
(Chemical Formula 3) R³_{Y}Si(OR⁴)_{4-Y} ... (3)
(Chemical Formula 4) R³_{Y}SiCl_{4-Y} ... (4)
(Chemical Formula 5) (R⁴O)_{3-Y}R³_{Y}Si-R⁵-SiR³_{Y}(OR⁴)_{3-Y} ... (5)
(Chemical Formula 6) Cl_{3-Y}R³_{Y}Si-R⁵-SiR³_{Y}C_{13-Y} ... (6)

   (R³ is any of a hydrogen atom, a methyl group, an ethyl group, a propyl group, an isopropyl group, and a phenyl group. R⁴ is any of a methyl group, an ethyl group, a propyl group, and an isopropyl group. R⁵ is any of a methylene group, an ethylene group, a propylene group, a butylene group, a pentylene group, a hexylene group, and a phenylene group. Y is an integer of 0 or 2 or less).

Examples of a cross-linking agent covalently bonded indirectly to the nanoparticle 11 via an organosilyl group (organic silane molecule 13) include those including two or more reactive functional groups that react with the functional group of the organic silane molecule 13. Examples of such a cross-linking agent include polyfunctional allyl (vinyl), polyfunctional thiol, polyfunctional (meth)acrylate, and polyfunctional glycidyl.

Specific examples of the polyfunctional allyl (vinyl) include diallyl ether, diallyl sulfide, diallyl amine, diallyl adipate, diallyl dimethyl silane, diallyl isophthalate, diallyl urea, dimethyl divinyl silane, divinyl tetramethyl disiloxane, hexadiene, tetraallyloxyethane, triallyl cyanurate, and triallyl amine.

Specific examples of the polyfunctional thiol include ethanedithiol, propanedithiol, hexanedithiol, pentaerythritol tetrakis (mercaptoacetate), pentaerythritol tetrakis (3-mercaptobutyrate), 1,4-bis(3-mercaptobutyryloxy)butane, 1,3,5-tris(2-(3-sulfanylbutanoyloxy)ethyl)-1,3,5-triazinane-2,4,6 trione, and trimethylolpropane tris(3-mercaptobutyrate).

Specific examples of the polyfunctional (meth)acrylate include diethylene glycol dimethacrylate, ethylene glycol dimethacrylate, tetraethylene glycol diacrylate, diethylene glycol diacrylate, trimethylolpropane triacrylate, trimethylolpropane trimethacrylate, pentaerythritol tetraacrylate, and pentaerythritol tetramethacrylate.

Specific examples of the polyfunctional glycidyl include a glycidyl ether type epoxy resin such as bisphenol A diglycidyl ether, bisphenol F diglycidyl ether, or resorcinol diglycidyl ether, phthalic acid diglycidyl ester and dimer acid diglycidyl ester, triglycidyl ether triphenylmethane, tetraglycidyl ether tetraphenylethane, bisphenol S diglycidyl ether, cresol novolac glycidyl ether, triglycidyl isocyanurate, and tetrabrom bisphenol A diglycidyl ether.

In the structure 1 of the present embodiment, the number of the nanoparticles 11 closest to one nanoparticle 11 is one to four, and four nanoparticles 11 have a diamond structure in the structure 1, for example, as illustrated in FIG. 6. Such a structure 1 has a porosity of 66% or more, for example, thereby enabling the structure 1 to obtain high light transmittance.

An air gap G formed in the structure 1 includes, for example, continuous fine pores. The fine pore has an average pore diameter of several nm to several tens of nm, for example. This allows the structure 1 to have a fine sponge-like bulk structure. Although air is usually present inside the air gap G, the air gap G can be evacuated, or, for example, a gas, having a lower thermal conductivity than that of air, such as helium (He) or argon (Ar) can be encapsulated thereinto, thereby further lowering the thermal conductivity of the structure 1.

The number of the nanoparticles 11 closest to one nanoparticle 11 can be confirmed, for example, as follows. First, in the same manner as in the case of determining the average particle diameter (median diameter) of the nanoparticle 11 described above, the structure 1 as a measurement target is subjected to working by a FIB method or the like to perform thinning. The cross-section of the obtained thinned sample is subjected to cross-sectional observation using a transmission electron microscope (Tecnai G2 manufactured by FEI Ltd.) to enable a plurality of nanoparticles 11 to be observed at an acceleration voltage of 200 kV and at a field of view of 50 nm × 50 nm, whereby a TEM photograph is taken. It is assumed that the photographing position is selected at random from the thinned sample.

Next, 50 nanoparticles 11, of which diameters can be clearly confirmed in a direction of an observation surface, are selected from the taken TEM photograph. When the number of the nanoparticles 11, of which the diameters can be clearly confirmed in the direction of the observation surface, present inside photographed one field of view is less than 50, 50 nanoparticles11, of which the diameters can be clearly confirmed in the direction of the observation surface, are selected from a plurality of fields of view. For example, in FIG. 3, a nanoparticle e and a nanoparticle f, of which diameters can be clearly confirmed in the direction of the observation surface, are selected. Meanwhile, for example, as for the nanoparticle c and the nanoparticle d, particles overlap each other in a depth direction of observation and positions of the particles are not correctly confirmable, and thus the nanoparticle c and the nanoparticle d are not suitable as measurement targets.

For each of the selected 50 nanoparticles 11, the number of nanoparticles (e.g., nanoparticles e-1, e-2, and e-3 and nanoparticles f-1, f-2, f-3, and f-4) present at positions closer than a certain distance to a nano particle (e.g., nanoparticle e and nanoparticle f) is measured. It is assumed here that the certain distance is 0.5 times the diameter of the nanoparticle 11, which is the maximum value of the length of the cross-linking part 21. It is difficult to directly confirm the presence of the cross-linking part 21 because no image thereof is photographed by the electron microscope. However, in a case where the cross-linking part 21 is not present, it is not possible to maintain a structure in which the nanoparticles 11 are coupled to each other. Therefore, it can be considered that the cross-linking part 21 is present between the nanoparticle 11 and the nanoparticle 11. That is, the number of the nanoparticles 11 closest to one nanoparticle 11 corresponds to the number of the nanoparticles 11 bonded together via the cross-linking parts 21.

It is to be noted that the number of the nanoparticles 11 closest to one nanoparticle 11, i.e., the number of the nanoparticles 11 bonded via the cross-linking parts 21 refers to the number of other nanoparticles 11 bonded to the one nanoparticle 11 via the cross-linking parts 21. For example, in a case where certain one nanoparticle 11 is bonded to only another one nanoparticle 11 via a plurality of cross-linking parts 21, the number of the nanoparticle 11 bonded to the nanoparticle 11 via the cross-linking part 21 is one. The "number of the nanoparticles 11 closest to one nanoparticle 11" is obtained by determining the simple average (arithmetic average) of the numbers of other nanoparticles 11 bonded via the cross-linking parts 21 to the respective 50 nanoparticles 11 thus determined.

In addition, in a case where a component other than the nanoparticle 11 and the amphipathic molecule 12 or the organic silane molecule 13 (silane coupling agent) that coats the nanoparticle 11 is detected upon performing component analysis and composition analysis of the structure 1 using the above-described FT-IR, GC, XPS, NMR and EDX, the component can be considered to be derived from the cross-linking part 21. Thus, it can be appreciated that the cross-linking part 21 including this component is present between the nanoparticles 11.

It is to be noted that the number of the nanoparticles 11 closest to one nanoparticle 11 is not necessarily limited to four or less. For example, when the simple average (arithmetic average) of the numbers of the nanoparticles 11 closest to one nanoparticle 11 within one field of view is four or less, the nanoparticle 11, to which five or more nanoparticles 11 are closest, may be included within one field of view.

### (1-2. Method of Manufacturing Structure)

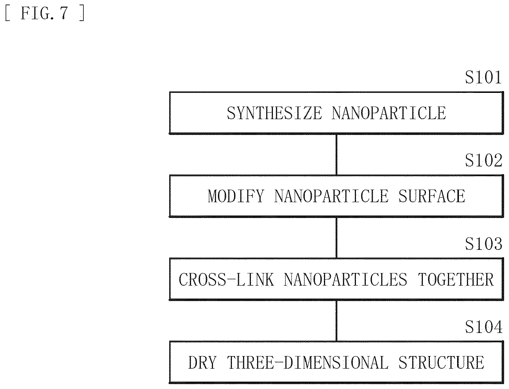

FIG. 7 illustrates a flowchart of manufacturing steps of the structure 1. Hereinafter, description is given first of a method of manufacturing the structure 1 in which a plurality of nanoparticles 11 surface-coated with the amphipathic molecule 12 are coupled to each other by the cross-linking parts 21.

### (Method of Manufacturing Structure Using a Plurality of Nanoparticles Surface-Coated with Amphipathic Molecule)

First, the nanoparticle 11 (e.g., silica particle) is synthesized using a liquid phase method (step S101). In general, a method of manufacturing silica nanoparticles is roughly classified into two types: a gas phase method and a liquid phase method. As described above, a fine nanoparticle 11 having a diameter of 10 nm or less is able to be isolated without causing aggregation by using the liquid phase method. It is preferable to select, as a precursor in the liquid phase method, a molecule represented by the following general formula (7), which is able to form a three-dimensional polysiloxane skeleton (Si-O-Si) through a hydrolysis reaction and a condensation polymerization reaction. Examples of such a precursor include water glass (silicate soda (sodium silicate)) and an alkoxysilane molecule. The alkoxysilane molecule may be a molecule, in which some of alkoxy groups are substituted with non-hydrolyzable functional groups, and is no obstacle to the formation of the polysiloxane skeleton.
(Chemical Formula 7)

R⁶_{Z}Si(OR⁷)_{4-Z} ... (7)

(R⁶ is any of a methyl group, an ethyl group, a propyl group, an isopropyl group, a butyl group, a pentyl group, a hexyl group, a heptyl group, an octyl group, a decyl group, a dodecyl group, a hexadecyl group, a vinyl group, a phenyl group, an acryloxy group, a methacryloxy group, an aminopropyl group, a glycidoxypropyl group, and a mercaptopropyl group. R⁷ is any of a hydrogen atom, a methyl group, an ethyl group, a propyl group, and an isopropyl group. Z is an integer of 0 or 2 or less.)

After the above-described precursor is dissolved in water or an organic solvent, acidity or basicity is adjusted. Accordingly, silica particles are formed by a polymerization reaction. It is to be noted that, as long as the diameter of a final nanoparticle 11 is 10 nm or less, the method is not limited to the above-described manufacturing method. The followings are examples of reference literatures. For example, Literature 1 (T. Yokoi et al. Chem. Mater. 2009, 21, 3719-3729) reports formation of a nanoparticle having a diameter of 8 nm in an aqueous solution in the presence of an amino acid, in which the nanoparticle is surface-coated with an amino acid molecule, thereby enabling isolation without causing aggregation. Literature 2 (S. Sakamoto et al. Langmuir 2018, 34, 1711-1717) reports formation of a nanoparticle having a diameter of 3 nm by using an inverted micellar liquid crystal phase as a template, in which the nanoparticle is surface-coated with surfactant molecules, thereby enabling isolation of the nanoparticles without causing aggregation thereof.

Next, the nanoparticles 11 are dispersed in a solvent to modify the surfaces (step S102). For example, a surfactant molecule, an amino acid molecule, or a macromolecule is added, as the amphipathic molecule 12, to a dispersion liquid in which the nanoparticles 11 are dispersed. The added surfactant molecule, amino acid molecule, or macromolecule is adsorbed on the surface of the nanoparticle 11 to serve to prevent the aggregation of the nanoparticles. As in the above-mentioned Literatures 1 and 2, depending on a manufacturing method, the nanoparticle 11 surface-coated with the surfactant molecule, amino acid molecule, or macromolecule is obtained. In such a case, the addition of the amphipathic molecule 12 is omitted.

Subsequently, a cross-linking agent (silane compound) is used to cross-link the nanoparticles 11 together (step S103). The above-described silane compound having two or more reactive points is added as a cross-linking agent to the dispersion liquid in which the nanoparticles 11 are dispersed, with each surface being coated with the amphipathic molecule 12 such as a surfactant molecule, an amino acid molecule, or a macromolecule. The amount of the silane compound to be added is an amount by which one to four nanoparticles 11 are bonded to one nanoparticle 11. After the addition of the silane compound, the dispersion liquid is heated as needed. Thus, in the dispersion liquid, a cross-linking reaction of the nanoparticle 11 proceeds to form the structure 1 having a three-dimensional structure. The dispersion liquid gradually loses its fluidity to be brought into a gel state.

Finally, the dispersion liquid brought into a gel state is dried to obtain the structure 1 (step S104). Examples of methods for drying and removing the solvent include drying at an elevated temperature under normal pressure. In a case where disintegration of the structure 1 due to interfacial tension during drying is feared, it is preferable to use a supercritical drying method or a freeze-drying method. In the present embodiment, the surface of the nanoparticle 11 (silica particle), which is a cause of large interfacial tension, is deactivated by being coated with the amphipathic molecule 12. Therefore, the structure 1 is less likely to disintegrate during drying than in a case where the surface is not coated. Thus, the structure 1 illustrated in FIG. 1 is obtained.

Next, description is given of a method of manufacturing of the structure 1 in which a plurality of nanoparticles 11 surface-coated with the organic silane molecule 13 are coupled to each other by the cross-linking parts 21.

### (Method of Manufacturing Structure Using a Plurality of Nanoparticles Surface-Coated with Organic Silane Molecule)

First, in the same manner as the above-described nanoparticles 11 surface-coated with the amphipathic molecule 12, the nanoparticles 11 (e.g., silica particles) are synthesized using the liquid phase method (step S101), and then the nanoparticles 11 are dispersed in a solvent to modify the surfaces (step S102). Here, instead of the amphipathic molecule 12, the organic silane molecule 13 (silane coupling agent) represented by the general formula (1) or general formula (2) is added to the dispersion liquid. After the addition of the silane coupling agent, heating is performed as needed. This causes the nanoparticle 11 (silica particle) and the organic silane molecule 13 to react with each other to form a covalent bond, thus deactivating the surface of the nanoparticle 11 and preventing aggregation of the nanoparticles 11.

Next, the nanoparticles 11 are cross-linked using a cross-linking agent including two or more reactive functional groups (step S103). A silane compound such as the above-described polyfunctional allyl (vinyl), polyfunctional thiol, polyfunctional (meth)acrylate or polyfunctional glycidyl is added as the cross-linking agent to the dispersion liquid in which the nanoparticles 11 are dispersed, with each surface being coated with the organic silane molecule 13. After the addition of the silane compound, heating or light irradiation is performed as needed. Thus, in the dispersion liquid, a cross-linking reaction with the organic functional group of the organic silane molecule 13 proceeds to form the structure 1 having a three-dimensional structure. The dispersion liquid gradually loses its fluidity to be brought into a gel state. In a case where the cross-linking reaction is an organic reaction such as a radical reaction, cationic polymerization or anionic polymerization, an appropriate reaction initiator may be added.

Finally, in the same manner as the above-described nanoparticles 11 surface-coated with the amphipathic molecule 12, the dispersion liquid brought into a gel state is dried to obtain the structure 1 (step S104). Thus, the structure 1 illustrated in FIG. 1 is obtained.

### (1-3. Workings and Effects)

In the structure 1 of the present embodiment, the plurality of nanoparticles 11 surface-coated with the amphipathic molecule 12 or the organic silane molecule 13 are coupled to each other via the cross-linking part 21. This prevents aggregation of the plurality of nanoparticles 11 and allows for formation of the air gap G between the plurality of nanoparticles 11 coupled to each other. This is described below.

In buildings such as ordinary houses and offices, the percentage of heat escaping to the outside during cooling and heating through an opening such as a glass window accounts for most of the heat escaping. For example, during heating, the heat loss rate through the opening accounts for 48% of the entire heat loss. During cooling, the heat acquisition rate through the opening accounts for 71% of the entire heat acquisition. Examples of a proposed method for insulating the opening such as a glass window include a method in which a heat insulating film having an air gap structure is attached to a glass surface or a heat insulating material is interposed between double windows to improve heat insulating properties.

However, the heat insulating material currently used has an issue of greatly impaired degree of transparency due to insufficient transparency. The transparent heat insulating material currently used is configured by an aerogel in which silica particles are lined in a beaded shape to thereby form a porous structure. A typical aerogel has a beaded skeleton of a width of about 10 nm and has an air gap of about several tens of nm, and the aerogel scatters light depending on the thickness of the skeleton. The scattering intensity is proportional to the sixth power of the particle diameter, for example.

The aerogel is manufactured, for example, as follows. First, a silica alkoxide precursor is dissolved in a solvent such as ethanol, and particles are grown by hydrolysis and condensation polymerization to obtain nanoparticles. Thereafter, the nanoparticles are copolymerized together to form a skeleton, and are gelled. The resulting wet gel is subjected to supercritical drying to remove the solvent, for example, to thereby obtain a porous aerogel. In the above-described manufacturing method, the particle growth proceeds also in the steps of the skeleton formation and the drying, thus increasing the thickness of the skeleton of the aerogel and lowering the transparency.

As a heat insulating material having improved transparency, there has been reported, as described above, a heat insulating sheet having improved heat insulating performance and improved mechanical strength in addition to transparency, by using a sheet-like structure in which hollow particles are coupled to each other, and which has a sheet average pore diameter of 70 nm or less, a sheet porosity of 90% by volume to 99% by volume, and a light transmittance of 85% or more. However, although using the hollow particles as a constituent unit is an effective measure to enhance the heat insulation performance, the optical scatter becomes large, thus making it difficult to sufficiently improve transparency as compared with the existing aerogel.

In contrast, in the structure 1 of the present embodiment, the nanoparticles 11 are surface-coated with the amphipathic molecule 12 or the organic silane molecule 13, and the nanoparticles 11 are coupled to each other via the cross-linking part 21 including a silane compound, for example. This makes it possible to prevent aggregation of the plurality of nanoparticles 11. In addition, it is possible to form the air gap G between the plurality of nanoparticles 11 coupled to each other.

As described above, in the present embodiment, the plurality of nanoparticles 11 surface-coated with the amphipathic molecule 12 or the organic silane molecule 13 are coupled to each other via the cross-linking part 21, thus preventing aggregation of the plurality of nanoparticles 11. In addition, the air gap G is formed between the plurality of nanoparticles 11 coupled to each other. Thus, it is possible to achieve the structure 1 that has high light transmissivity while maintaining heat insulation performance and can be used as a heat insulating material, for example.

For example, in a case where the structure 1 of the present embodiment is attached to a glass window or interposed between double windows as described above, it is possible to suppress the heat balance of the glass window while ensuring higher light transmittance than in a case of using a typical aerogel, thus making it possible to improve cooling and heating efficiencies. Thus, it is possible to achieve both a reduction in the utility cost and environmental contribution.

In addition, for example, the use of the structure 1 of the present embodiment as a heat insulating material makes it possible to enhance the design of a product, such as a refrigerator or a bathtub, in which an opaque heat insulating material is generally used.

Next, description is given of a modification example of the foregoing embodiment. Hereinafter, components similar to those in the foregoing embodiment are denoted by the same reference numerals, and descriptions thereof are omitted as appropriate.

### <2. Modification Example>

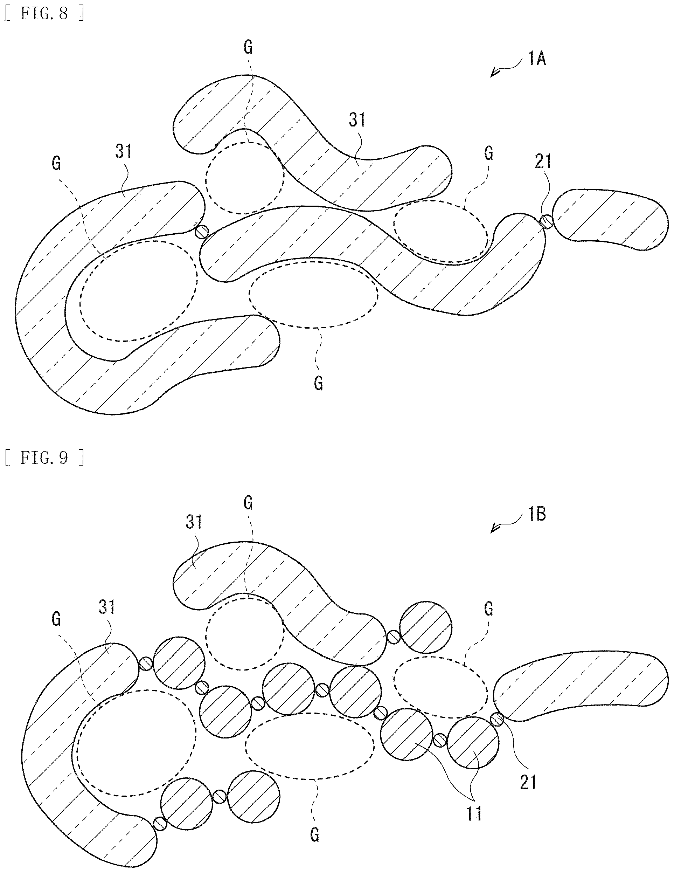

FIG. 8 schematically illustrates an example of a configuration of a structure (a structure 1A) according to a modification example of the present disclosure. In the same manner as the structure 1 in the foregoing embodiment, the structure 1A is used, for example, as a heat insulating material that suppresses heat balance of a window by being attached to a glass window or being interposed between double windows. The structure 1A of the present modification example differs from the foregoing embodiment in that a plurality of nanofibers 31 is used instead of the plurality of nanoparticles 11.

The nanofiber 31 is a fibrous material having a length of 100 times or more the diameter, for example, and is a silica nanofiber, for example. The average diameter (ϕ) of the nanofiber 31 is, for example, 10 nm or less, and preferably 5 nm or less. In the same manner as the nanoparticle 11, the nanofiber 31 is surface-coated with the amphipathic molecule 12 or the organic silane molecule 13, thus bringing the plurality of nanofibers 31 into a state of not being able to be covalently bonded to each other.

In the same manner as the foregoing embodiment, the plurality of nanofibers 31 are coupled to each other via the cross-linking part 21. The length of the cross-linking part 21 is preferably smaller than half (1/2) of the diameter (ϕ) of the nanofiber 31. This makes it possible to prevent aggregation of the plurality of nanofibers 31 inside the structure 1A.

For example, the nanofiber 31 is able to form a silica nanofiber having a diameter of 5 nm to 10 nm by using an inverted micellar liquid crystal phase as a template (Literature 3 (W.-C. Lai, L et al. J. Taiwan Inst. Chem. Eng. 2019, 99, 207-214)). In addition, for example, the nanofiber 31 is able to form a twisted rod-like silica nanofiber by utilizing self-assembly of aminopropyltrimethoxy silane (Literature 4 (Y. Kaneko et al. Chem. Mater. 2004, 16, 3417-3423)).

It is to be noted that above-described manufacturing method is exemplary, and this is not limitative as long as a the nanofiber 31 having a diameter of 10 nm or less is finally obtained.

As for the surface modification of the nanofiber 31, the cross-linking between the nanofibers 31 using a cross-linking agent, and the drying thereof, similar methods can be used to the above-described methods for the surface modification of the nanoparticle 11, the cross-linking between the nanoparticles 11 using a cross-linking agent, and the drying thereof.

It is to be noted that FIG. 8 illustrates an example of the structure 1A configured only by the nanofiber 31, but this is not limitative. For example, as in a structure 1B illustrated in FIG. 9, the nanoparticle 11 and the nanofiber 31 may be present in a mixed manner. Also in such a case, the nanoparticles 11 are coupled to each other, the nanofibers 31 are coupled to each other, and the nanoparticle 11 and the nanofiber 31 are coupled to each other, via the cross-linking part 21 described above.

As described above, in the structures 1A and 1B of the present modification example, some or all of the nanoparticles 11 are replaced with the nanofibers 31. The surface thereof is coated with the amphipathic molecule 12 or the organic silane molecule 13. The nanoparticle 11 and the nanofiber 31 are coupled to each other, or the nanofibers 31 are coupled to each other, for example, via the cross-linking part 21 including a silane compound. This makes it possible to prevent aggregation of the plurality of nanoparticles 11, the plurality of nanofibers 31, or the nanoparticle 11 and the nanofiber 31, constituting the structure 1A or the structure 1B. In addition, it is possible to form the air gap G between the plurality of nanoparticles 11 coupled to each other, between the plurality of nanofibers 31 coupled to each other, or between the nanoparticle 11 and the nanofiber 31 coupled to each other. Thus, it is possible to obtain effects similar to those of the foregoing embodiment.

### <3. Another Application Example>

The structure (e.g., structure 1) described in any of the foregoing embodiment and modification example has a transmittance of 70% or more, for example, thereby enabling the structure 1 to be used for a window glass and the like of an automobile. Further, the structure 1 has a transmittance of 90% or more, for example, thereby enabling the structure 1 to be used, for example, for a window glass of a building or as an alternative material to a glass substrate or a plastic.

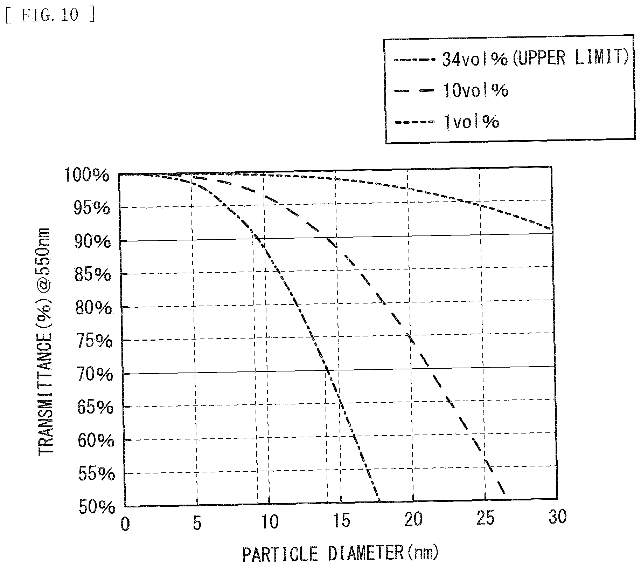

FIG. 10 illustrates transmittance for a wavelength of 550 nm when the structure 1 having a thickness of 1 mm is formed. For example, in a case where the number of the nanoparticles 11, of a plurality of nanoparticles 11 constituting the structure 1, closest to one nanoparticle 11 is four, the four nanoparticles 11 in the structure 1 have a diamond structure (see FIG. 6). In such a structure 1, the filling factor of the nanoparticles 11 is 34% by volume; as illustrated in FIG. 10, when the primary particle diameter is 14 nm, the structure 1 has a transmittance of 70%. Further, when the primary particle diameter is 9 nm, the structure 1 has a transmittance of 90%. Meanwhile, in a case where the number of the nanoparticles 11, of the plurality of nanoparticles 11 constituting the structure 1, closest to one nanoparticle 11 is less than four, the filling factor of the nanoparticles 11 in the structure 1 is less than 34% by volume. Therefore, in the same manner as the case where the number of the nanoparticles 11 closest to one nanoparticle 11 is four, when the primary particle diameter is 14 nm or less, the structure 1 has a transmittance of 70% or more. Further, when the primary particle diameter is 9 nm or less, the structure 1 has a transmittance of 90% or more.

Although the description has been given hereinabove of the present disclosure with reference to the embodiment and modification example, the present disclosure is not limited to the foregoing embodiment and the like, and may be modified in a wide variety of ways. For example, the foregoing embodiment or the like exemplifies a silica particle as the nanoparticle 11 and a silica nanofiber as the nanofiber 31, but this is not limitative. It may also be possible to use a nanoparticle or nanofiber including an inorganic oxide, an inorganic nitride, an inorganic carbide or an organic matter. In addition, the structure (e.g., structure 1) of the present disclosure may be configured by, for example, a plurality of types of nanoparticles and/or nanofibers for which the above-described materials are appropriately selected.

In addition, in the foregoing embodiment and the like, reference has been made, as application examples of the structure 1, to the attachment to a glass window, the arrangement between double windows, and the heat insulating material for a refrigerator, a bathtub or the like, for example; however, the structure 1 or the like of the present disclosure may be used, as a functional member other than the heat insulating material, for other electronic apparatuses and the like. For example, the structure 1 has applications similar to those of typical porous materials, such as an adsorbent of an odorous component, bacteria, and virus; a hygroscopic material that controls air humidity to be constant; and sound-absorbing material that prevents a sound wave from traveling. In addition, the structure 1 is able to be used for an application requiring transparency, and thus is also applicable to a photocatalyst, artificial photosynthesis, a structural material for an electronic apparatus such as a solar cell or a semiconductor, as well as to a material of a low dielectric constant film or a material for an antireflection film.

It is to be noted that the effects described herein are merely exemplary and should not be limited thereto, and may further include other effects.

It is to be noted that the present technology may also have the following configurations. According to the present technology of the following configurations, the plurality of nanoparticles or the plurality of nanofibers surface-coated with the amphipathic molecule or the organic silane molecule are coupled to each other via the cross-linking part, thus preventing aggregation of the plurality of nanoparticles or the plurality of nanofibers and allowing for formation of an air gap between the plurality of nanoparticles coupled to each other or between the plurality of nanofibers coupled to each other. Thus, it is possible to improve light transmittance while maintaining heat insulation performance.
(1) A structure including:
   a plurality of nanoparticles or a plurality of nanofibers surface-coated with an amphipathic molecule or an organic silane molecule; and
   a cross-linking part that couples the plurality of nanoparticles or the plurality of nanofibers to each other.
(2) The structure according to (1), in which the nanoparticles or the nanofibers and the cross-linking part form a covalent bond.
(3) The structure according to (1) or (2), in which
   the structure includes both of the plurality of nanoparticles and the plurality of nanofibers, and
   the nanoparticles and the nanofibers are partially coupled via the cross-linking part.
(4) The structure according to any one of (1) to (3), in which an average value of the numbers of the nanoparticles closest to one of the nanoparticles is one or more and four or less.
(5) The structure according to (4), in which the one nanoparticle and the nanoparticles closest to the one nanoparticle are coupled via the cross-linking part.
(6) The structure according to any one of (1) to (5), in which a length of the cross-linking part is smaller than 1/2 of an average particle diameter of the plurality of nanoparticles.
(7) The structure according to any one of (1) to (6), in which the length of the cross-linking part is smaller than 1/2 of an average diameter of the plurality of nanofibers.
(8) The structure according to any one of (1) to (7), in which the amphipathic molecule includes a surfactant molecule, an amino acid molecule, or a macromolecule.
(9) The structure according to (8), in which the macromolecule includes a block copolymer of a phospholipid or polyalkylene glycol.
(10) The structure according to any one of (1) to (9), in which the cross-linking part includes an organic matter or an inorganic matter covalently bonded directly to the nanoparticles or the nanofibers.
(11) The structure according to any one of (1) to (9), in which the cross-linking part includes an organic matter or an inorganic matter covalently bonded to the nanoparticles or the nanofibers via a silyl group.
(12) The structure according to any one of (1) to (11), in which the average particle diameter of the plurality of nanoparticles is 14 nm or less.
(13) The structure according to any one of (1) to (11), in which the average particle diameter of the plurality of nanoparticles is 9 nm or less.
(14) The structure according to any one of (1) to (13), in which the average diameter of the plurality of nanofibers is 10 nm or less.
(15) A method of manufacturing a structure, the method including:
   surface-coating a plurality of nanoparticles or a plurality of nanofibers by adding an amphipathic molecule or an organic silane molecule to a dispersion liquid in which the plurality of nanoparticles or the plurality of nanofibers are dispersed; and
   coupling the plurality of nanoparticles or the plurality of nanofibers to each other via a cross-linking part including a cross-linking agent further by adding the cross-linking agent.
(16) A heat insulating material including a structure, the structure including
   a plurality of nanoparticles or a plurality of nanofibers surface-coated with an amphipathic molecule or an organic silane molecule, and
   a cross-linking part that couples the plurality of nanoparticles or the plurality of nanofibers to each other.

This application claims the benefit of Japanese Priority Patent Application JP2021-009119 filed with the Japan Patent Office on January 22, 2021, the entire contents of which are incorporated herein by reference.

It should be understood by those skilled in the art that various modifications, combinations, sub-combinations, and alterations may occur depending on design requirements and other factors insofar as they are within the scope of the appended claims or the equivalents thereof.

## Claims

1. A structure comprising:
a plurality of nanoparticles or a plurality of nanofibers surface-coated with an amphipathic molecule or an organic silane molecule; and
a cross-linking part that couples the plurality of nanoparticles or the plurality of nanofibers to each other.

2. The structure according to claim 1, wherein the nanoparticles or the nanofibers and the cross-linking part form a covalent bond.

3. The structure according to claim 1, wherein
the structure comprises both of the plurality of nanoparticles and the plurality of nanofibers, and
the nanoparticles and the nanofibers are partially coupled via the cross-linking part.

4. The structure according to claim 1, wherein an average value of the numbers of the nanoparticles closest to one of the nanoparticles is one or more and four or less.

5. The structure according to claim 4, wherein the one nanoparticle and the nanoparticles closest to the one nanoparticle are coupled via the cross-linking part.

6. The structure according to claim 1, wherein a length of the cross-linking part is smaller than 1/2 of an average particle diameter of the plurality of nanoparticles.

7. The structure according to claim 1, wherein a length of the cross-linking part is smaller than 1/2 of an average diameter of the plurality of nanofibers.

8. The structure according to claim 1, wherein the amphipathic molecule comprises a surfactant molecule, an amino acid molecule, or a macromolecule.

9. The structure according to claim 8, wherein the macromolecule comprises a block copolymer of a phospholipid or polyalkylene glycol.

10. The structure according to claim 1, wherein the cross-linking part comprises an organic matter or an inorganic matter covalently bonded directly to the nanoparticles or the nanofibers.

11. The structure according to claim 1, wherein the cross-linking part comprises an organic matter or an inorganic matter covalently bonded to the nanoparticles or the nanofibers via a silyl group.

12. The structure according to claim 1, wherein an average particle diameter of the plurality of nanoparticles is 14 nm or less.

13. The structure according to claim 1, wherein an average particle diameter of the plurality of nanoparticles is 9 nm or less.

14. The structure according to claim 1, wherein an average diameter of the plurality of nanofibers is 10 nm or less.

15. A method of manufacturing a structure, the method comprising:
surface-coating a plurality of nanoparticles or a plurality of nanofibers by adding an amphipathic molecule or an organic silane molecule to a dispersion liquid in which the plurality of nanoparticles or the plurality of nanofibers are dispersed; and
coupling the plurality of nanoparticles or the plurality of nanofibers to each other via a cross-linking part including a cross-linking agent further by adding the cross-linking agent.

16. A heat insulating material comprising a structure, the structure including
a plurality of nanoparticles or a plurality of nanofibers surface-coated with an amphipathic molecule or an organic silane molecule, and
a cross-linking part that couples the plurality of nanoparticles or the plurality of nanofibers to each other.
